# EUROPÄISCHE PATENTSCHRIFT

(11) **EP 0 807 604 B1**
(45) Veröffentlichungstag und Bekanntmachung des Hinweises auf die Patenterteilung: **10.10.2001**
(21) Anmeldenummer: 97107490.1
(22) Anmeldetag: 07.05.1997
(51) Int. Cl.: C01G 25/02

(54) **Verfahren zur Herstellung von pulverförmigem Zirkondioxid**
Process for the preparation of powdery zirconium oxide
Procédé de fabrication de zircone pulvérulente

(30) Priorität: 15.05.1996 DE 19619638
(43) Veröffentlichungstag der Anmeldung: 19.11.1997
(73) Patentinhaber: BASF Aktiengesellschaft, 67063 Ludwigshafen (DE)
(72) Erfinder: Sterzel, Hans-Josef, Dr., 67125 Dannstadt-Schauernheim (DE); Hesse, Werner, Dr., 67283 Obrigheim (DE)

(56) Entgegenhaltungen:
- WO-A-93/23333
- FR-A- 1 558 466
- US-A- 4 639 356
- US-A- 5 312 613

## Beschreibung

Die vorliegende Erfindung betrifft ein Verfahren zur Herstellung von pulverförmigem Zirkondioxid durch Lösen einer Zirkonverbindung in Ameisensäure, Entfernen der flüchtigen Komponenten und Kalzination des Rückstands. Die Erfindung betrifft weiterhin ein Verfahren zur Herstellung von stabilisiertem pulverförmigem Zirkondioxid, dessen tetragonale Modifikation gegenüber der Umwandlung in die monokline Modifikation durch einen stabilisierenden Zusatz stabilisiert ist.

Zirkondioxid wird aufgrund seiner Eigenschaften in zunehmendem Maße in solchen Anwendungsbereichen eingesetzt, in denen hohe mechanische, thermische und chemische Beständigkeit des Werkstoffs gefordert ist. Zirkondioxid kann beispielsweise alleine oder in Gemisch mit anderen Oxiden als Werkstoff zur Herstellung von Formkörpern aus Sinterkeramik verwendet werden. Das für diese Sinterkörper verwendete Zirkondioxidpulver wird in der Regel in stabilisierter Form eingesetzt, wodurch die tetragonale Hoch-temperaturmodifikation auch bei Abkühlung auf Anwendungstemperaturen erhalten bleibt. Um diese Stabilisierung zu erreichen, wird das Zirkondioxidpulver mit anderen Oxiden wie z.B. Yttriumoxid, Ceroxid, Oxide der Seltenen Erden, Calciumoxid, Magnesiumoxid oder mit Gemischen dieser Oxide dotiert. Damit die aus dem stabilisierten Zirkondioxid, z.B. durch Pressen, Spritzguß oder Schlickerguß, hergestellten Grünlinge das gewünschte Sinterverhalten und die gesinterten Formkörper die angestrebten guten, mechanischen, thermischen und chemischen Eigenschaften aufweisen, ist es notwendig, daß das zudotierte Oxid möglichst gleichmäßig in dem Zirkondioxidgitter verteilt ist. Für eine gute Verarbeitbarkeit muß das Pulver außerdem gut fließfähige Zubereitungen bilden können, und die Pulverteilchen sollten aus lockeren Agglomeraten bestehen. Ferner ist es zum Erhalt optimaler Eigenschaften der Formkörper aus Sinterkeramik essentiell, daß das verwendete Zirkondioxidpulver frei von Verunreinigungen wie Chloriden oder Sulfaten ist.

Zur Herstellung von Zirkondioxid wird üblicherweise in einem ersten Schritt eine Zirkonverbindung wie z.B. Zirkonylchlorid in einem Lösungsmittel wie z.B. Wasser gelöst. In einem zweiten Schritt wird anschließend die lösliche Zirkonverbindung zu einer Zirkonverbindung umgesetzt, die in dem betreffenden Lösungsmittel schwer löslich ist und aus der durch Calcination Zirkondioxid erhalten werden kann, z.B. durch Hydrolyse unter Temperaturerhöhung zu schwerlöslichem Zirkonoxidhydrat. Vor der Calcination muß als dritter Verfahrensschritt die unlösliche Zirkonverbindung von der überstehenden Lösung abgetrennt werden. Als vierter Verfahrensschritt muß eine Abtrennung von Verunreinigungen erfolgen, die zu einer Verschlechterung der Eigenschaften von Werkstücken führen würden, die unter Verwendung des so gewonnenen Zirkondioxids hergestellt sind. Daran schließt sich als nächster, fünfter Verfahrensschritt die Calcination des Niederschlags und seine Umwandlung in Zirkondioxid an. Da der Niederschlag in diesem Verfahren üblicherweise in Form grober Agglomerate anfällt, muß nach Calcination das Zirkondioxid in einem letzten, sechsten Verfahrensschritt auf die gewünschte Korngröße gemahlen werden. Beispiele für diese Vorgehensweise findet man z.B. in den europäischen Patentanmeldungen Nr. 251 538 und 517 437 oder in der Deutschen Patentschrift Nr. 37 06 172. Hauptnachteil dieser Verfahren ist, daß sie in der Regel mehrere aufwendige und kostenintensive mechanische Verfahrensschritte wie Filtration, Waschung und Mahlung umfassen.

Es sind ebenfalls Verfahren bekannt, welche die Abscheidung eines schwerlöslichen Niederschlags, seine Filtration und Waschung umgehen. Die bekannten derartigen Verfahren verwenden ebenfalls Zirkonylchlorid als Ausgangsverbindung. So wird in EP-A-421 077 gelehrt, Zirkonylchlorid in einer Schmelze von Ammoniumchlorid zu lösen, diese Schmelze einzudampfen und den Rückstand zu mahlen. Nach dem in EP-A-427 938 offengelegten Verfahren wird eine Lösung von Zirkonylchlorid in Ameisensäure durch Eindampfen und Calcination des Rückstands zu Zirkondioxid umgewandelt. Hauptnachteil dieser Verfahren ist, daß die Herstellung eines chloridfreien Zirkondioxids nur unter sehr hohem Aufwand möglich ist.

FR 1 558 466 beschreibt ein Verfahren zur Herstellung von yttriumoxidhaltigem Zirkoniumoxid, bei dem zunächst festes Zirkoniumformiat durch Umsetzung von Zirkoniumnitrat mit reiner Ameisensäure hergestellt wird, und festes Yttriumformiat durch Umsetzung von Yttriumoxid mit Salpeter- und anschließend Ameisensäure hergestellt wird. Das Zirkoniumformiat wird anschließend in 10%-iger wäßriger Ameisensäure wieder gelöst, und mit einer wäßrigen Lösung des Yttriumformiats gemischt. Durch Eindampfen der so hergestellten Mischung und anschließende Pyrolyse und Kalzination des Rückstandes wird das gewünschte Produkt hergestellt.

US 5,312,613 lehrt ein Verfahren zur Herstellung von yttriumoxidhaltigem Zirkoniumoxid, bei dem Zirkoniumcarbonat und Yttriumcarbonat in einer Mischung aus Ameisensäure und Wasser im Molverhältnis von ca. 2,17 gelöst und anschließend unter kräftigem Rühren in Ammoniakwasser gegeben werden. Der dabei entstehende Niederschlag wird gewonnen und durch Trocknung und Kalzination in das gewünschte Produkt überführt.

Der Erfindung lag also die Aufgabe zugrunde, ein Verfahren zu finden, das es unter Vermeidung aufwendiger mechanischer Verfahrensschritte ermöglicht, ein chloridfreies Zirkondioxidpulver herzustellen. Des weiteren lag der Erfindung die Aufgabe zugrunde, ein Verfahren zu finden, daß es unter Vermeidung mechanisch aufwendiger Verfahrensschritte ermöglicht, chloridfreies Zirkondioxid herzustellen, dem vor, während oder nach dem erfindungsgemäßen Verfahren ein Stabilisator zugegeben werden kann, der die tetragonale Modifikation des Zirkondioxids gegen die Umwandlung in die monokline Modifikation stabilisiert.

Demgemäß wurde nun ein Verfahren zur Herstellung von pulverförmigen Zirkondioxid durch Lösen einer chloridfreien Zirkonverbindung in einem Ameisensäure-Wasser-Gemisch im Molverhältnis 1:1 bis 1:3, Entfernen der flüchtigen Komponenten und Kalzination des Rückstandes gefunden, das dadurch gekennzeichnet ist, daß man das pulverförmige Zirkondioxid durch Sprühtrocknung der Lösung und Kalzination des Sprühpulvers gewinnt.

In überraschender Weise wurde gefunden, daß man chloridfreie Zirkonverbindungen in einem Ameisensäure-Wasser-Gemisch in hohen Konzentrationen rückstandsfrei zu klaren und hervorragend zur Weiterverarbeitung geeigneten Lösungen lösen kann.

Das erfindungsgemäße Verfahren kann wie folgt durchgeführt werden:

In einem ersten Schritt wird die chloridfreie Zirkonverbindung, z.B. Zirkonoxidhydrat oder basisches Zirkoncarbonat, in einem Ameisensäure-Wasser-Gemisch gelöst. Das Molverhältnis von Ameisensäure : Wasser in diesem Lösungsmittel beträgt im allgemeinen 1 : 1 bis 1 : 3, bevorzugt 1 : 1,5 bis 1 : 2,5 und ganz besonders bevorzugt 1 : 1,8 bis 1 : 2,2. Die optimale Lösetemperatur liegt im Bereich von 50 bis 95°C, vorzugsweise im Bereich von 70 bis 85°C. Im allgemeinen wird das Gemisch aus Ameisensäure und Wasser vorgelegt und die Feststoffe werden zudosiert. Die umgekehrte Reihenfolge ist jedoch ebenfalls möglich. Wenn Carbonat verwendet wird, so stellt man die Dosierrate so ein, daß gerade kein Über-schäumen des Reaktorinhalts stattfindet. Zum Lösen von 1 kg basischem Zirkoncarbonat können z.B. 0,4 kg Wasser und 0,5 kg Ameisensäure eingesetzt werden, um eine niedrigviskose, klare Lösung zu erhalten. Es ist ebenso möglich, pro Kilogramm Zirkoncarbonat nur 0,24 kg Wasser und 0,307 kg Ameisensäure einzusetzen; in diesem Fall erhält man eine hochviskose, aber ebenfalls klare Lösung, die gut weiterzuverarbeiten ist.

In einem zweiten Schritt werden die verdampfbaren Bestandteile dieser Lösung entfernt. Diese Entfernung der flüchtigen Komponenten kann durch einfaches Eindampfen erfolgen, im allgemeinen wird es zur Herstellung von Zirkondioxidpulvern jedoch zweckmäßig und vorteilhaft sein, eine Sprühtrocknung vorzunehmen.

In einem dritten Schritt wird der Feststoff anschließend zum Zirkondioxid calciniert. Die Sprühtrocknung und die Calcination sind an sich bekannte Verfahrensschritte und können,in an sich bekannter Weise durchgeführt werden.

Beim erfindungsgemäßen Verfahren sind vergleichsweise hohe Konzentrationen der Feststoffe in der Lösung bevorzugt. Die Lösung vor Sprühtrocknung sollte vorteilhafterweise einen Gehalt an Zirkonverbindung, berechnet als Zirkondioxid, von mindestens 25 Gew.-%, vorzugsweise von 30 bis 40 Gew.-%, aufweisen. In diesem Fall ist der Sprühtrocknungsprozeß nicht nur besonders wirtschaftlich, die erhöhte Viskosität der Ausgangslösung führt überraschenderweise zu einem Sprühpulver, das sich ohne zusammenzubacken bei hohen Temperaturen, z.B. 750-1350°C und bevorzugterweise 950-1250°C, calcinieren läßt. Dieses Verhalten ist wiederum sehr günstig, da sich derart hochtemperaturcalcinierte Pulver leichter in keramische Zubereitungen, insbesondere Spritzgießmassen, einarbeiten lassen. Es werden dann niedrigere Viskositäten der Spritzgießmassen und höhere Volumenfüllgrade und damit eine höhere Sinteraktivität und ein erniedrigter Sinterschrumpf erreicht.

Verbackene hochtemperaturkalzinierte Pulver können prinzipiell durch Desagglomeration, üblicherweise durch Mahlung in einer Kugelmühle, wieder in zur Weiterverarbeitung geeignete Pulver umgewandelt werden. Dieser Schritt ist sehr aufwendig und kostenintensiv. Außerdem wird das Pulver in nachteiliger Weise mit Mahlabrieb kontaminiert, was die Qualität von keramischen Formteilen, die dieses Pulver enthalten, verschlechtert. Es ist ein Vorteil der erfindungsgemäßen Verfahrensweise, diesen Mahlschritt weitgehend zu verkürzen. Mahldauern von 30 bis 90 min reichen vollkommen aus.

Dem Zirkondioxid können in einfacher Weise vor, während oder nach seiner Herstellung Zusätze oder Vorläufe von Zusätzen zugegeben werden, welche die tetragonale Modifikation des Zirkondioxidend-produkts gegenüber der Umwandlung in die monokline Modifikation stabilisieren. Zum Beispiel können den Zirkonverbindungen, die im erfindungsgemäßen Verfahren eingesetzt werden, vor deren Lösung im Ameisensäure-Wasser-Gemisch stabilisierende Verbindungen oder Vorläufer solcher stabilisierender Verbindungen, die vorteilhafterweise ebenfalls im Ameisensäure-Wasser-Gemisch löslich sind, als Feststoffe untergemischt werden.

Ebenso können dem erfindungsgemäß hergestellten Zirkondioxid nach seiner Herstellung stabilisierende Zusätze oder Vorläufer solcher Zusätze beigegeben werden, z.B. durch Auf fällen von Vorläufern stabilisierender Oxide in Form von Oxidhydraten, Carbonaten, Oxalaten oder ähnlichen, durch Calcination in Oxide überführbaren Verbindungen in Suspension, Entfernung der flüchtigen Bestandteile der Suspension und Calcination. In bevorzugter Weise wird mindestens ein stabilisierender Zusatz und/oder mindestens eine Vorstufe eines solchen stabilisierenden Zusatzes gemeinsam mit der Zirkonverbindung in der Mischung aus Ameisensäure und Wasser gelöst. In bevorzugter Weise wird als stabilisierender Zusatz oder Vorstufe eine stabilisierenden Zusatzes eine Yttriumverbindung verwendet. Bevorzugt ist die Verwendung einer chloridfreien Yttriumverbindung, die in dem als Lösungsmittel verwendeten Gemisch aus Ameisensäure und Wasser löslich ist. Geeignete yttriumhaltige Verbindungen sind z.B. Yttriumoxid oder Yttriumcarbonat. Im allgemeinen wird die Menge an Yttriumverbindung so bemessen, daß das Zirkondioxid nach Sprühtrocknung und Calcination einen Yttriumoxidgehalt von 2 bis 10 Mol-%, vorzugsweise 2,5 bis 5 Mol-% aufweist.

Wenn der stabilisierende Zusatz oder die stabilisierenden Zusätze und/oder Vorläufer solcher Zusätze gemeinsam mit der Zirkonverbindung in dem Ameisensäure-Wasser-Gemisch gelöst werden, sollte die Lösung vorteilhafterweise einen Gehalt an Zirkon- und Stabilisatorverbindungen, berechnet als die herzustellenden Oxide, von mindestens 25 Gew.-%, vorzugsweise von 30 bis 40 Gew.-% aufweisen.

### Beispiele

### Beispiel 1

115 g Yttriumoxid (0,5 Mol) wurden in einer Mischung aus 135 g Wasser und 170 g Ameisensäure unter Rühren bei 80°C innerhalb von 17 min gelöst. Es wurde eine viskose, völlig klare Lösung erhalten.

### Beispiel 2

206 g Yttriumcarbonat (0,5 Mol) wurden in einer Mischung aus 160 g Wasser und 200 g Ameisensäure unter Kohlendioxidentwicklung bei 70°C innerhalb von 20 min gelöst. Wie in Beispiel 1 wurde eine viskose, klare Lösung erhalten.

### Beispiel 3

In einem offenen Rührgefäß wurde eine Mischung von 360 g Wasser und 460 g Ameisensäure vorgelegt und auf ca. 75°C erwärmt. Innerhalb von 2 Stunden wurden unter Kohlendioxidentwicklung 850 g eines basischen Zirkoniumcarbonats, dessen Gehalt an Zirkondioxid 42 Gew.-% betrug, zudosiert. Es wurde eine klare Lösung erhalten, die auch nach Abkühlen auf Raumtemperatur stabil blieb.

### Beispiel 4

In einem offenen Rührgefäß wurden 1250 g Wasser sowie 1600 g Ameisensäure vorgelegt, gemischt und auf 85°C erwärmt. Sodann wurden 92 g Yttriumoxid, entsprechend 0,4 Mol, in der Mischung gelöst. Dann wurden innerhalb von 1,5 h 3400 g basisches Zirkoniumcarbonat unter Kohlendioxidentwicklung eingetragen und gelöst.

Nach dem Abkühlen blieb die Lösung mit einem Feststoffgehalt bezogen auf Zirkondioxid/Yttriumoxid im Molverhältnis 97 : 3 von ca. 35 % vollkommen klar.

### Beispiel 5

Die Lösung aus Beispiel 4 wurde in einem Sprühtrockner bei einer Ausgangstemperatur von 140-150°C zu einem Sprühpulver verarbeitet. Es wurden 2480 g eines feinen Sprühpulvers erhalten.

2300 g des Sprühpulvers wurden an Luft calciniert. Dazu wurde das Pulver in einem flachen offenen Behälter aus Aluminiumoxid mit einer Heizrate von 5°C/min auf 1000°C aufgeheizt. Bei ca. 350°C wurde das Pulver dunkelgrau, bei ca. 700°C reinweiß. Die Temperatur wurde 2 h bei 1000°C gehalten und der Ofen danach abkühlen gelassen. Es wurden 1380 g eines rein weißen, lockeren Zirkondioxidpulvers erhalten.

Rasterelektronenmikroskopische Aufnahmen zeigten, daß das Pulver in Form von Hohlkugeln von 5 bis 20 µm Außendurchmesser und einer Wandstärke um 1 µm vorlag.

Das Pulver wurde im gleichen Gewichtsanteil voll entsalzten Wassers ohne Zusatz weiterer Dispergiermittel, jedoch einer geringen Menge Ammoniak, um den pH-Wert bei 9 bis 10 zu halten, wodurch ein Lösen von Yttriumhydroxid verhindert wird, suspendiert und diese Suspension mittels einer Rührwerkskugelmühle, gefüllt mit Zirkondioxidmahlkugeln von ca. 2 mm Durchmesser, eine Stunde lang gemahlen.

Die erhaltene Suspension wurde in einem Sprühtrockner bei 140-150°C Ausgangstemperatur zu einem Sprühpulver verarbeitet, das aus lockeren Agglomeraten bestand.

In einem auf 160°C vorgeheizten Kneter wurden 300 ml Butylglykol und 168 g Polyoximethylen gemischt, wobei sich das Polyoximethylen löste. Das verwendete Polyoximethylen enthielt als stabilisierendes Copolymer 2 Mol-% Butandiolformal. Außerdem wurden 17 g Polyethylenglykol mit einer Molmasse von ca. 800 als Dispergator zugegeben sowie 23 g Polybutandiolformal mit einer Molmasse von ca. 80.000 g/Mol.

In diese Mischung wurden im Verlauf von einer Stunde 1000 g des erfindungsgemäß hergestellten stabilisierten Zirkondioxidpulvers unter Kneten eingetragen. Die Mischung wurde bis auf 180°C unter Kneten weiter aufgeheizt und das Butylglykol dabei abgezogen. Anschließend wurde noch eine halbe Stunde bei 180°C geknetet, danach abgekühlt und während des Abkühlens die Mischung granuliert. Aus dem erhaltenen Granulat mit einem Volumenanteil an Zirkondioxid/ Yttriumoxid von 49,8 % wurden durch Spritzgießen die zur Ermittlung des mechanischen Niveaus üblichen Biegestäbe hergestellt. Die Biegestäbe wurden bei einer Temperatur von 130°C in einer Stickstoffatmosphäre, die ca. 2 Vol-% gasförmige Salpetersäure enthielt, innerhalb von 4 Stunden durch Depolymerisation ohne Dimensionsänderung von Polyoximethylen und Polybutandiolformal befreit. Danach wurden die Stäbe in einen Sinterofen überführt und unter Luft zunächst mit einer Heizrate von 5°C/h auf 500°C aufgeheizt, eine Stunde bei 500°C belassen und danach mit 5°C/h auf 1.500°C aufgeheizt und zwei Stunden bei 1500°C belassen. Danach wurde der Sinterofen abkühlen gelassen. Die linearen Dimensionen der Stäbe waren um 20,3 % geschrumpft, ihre Dichte betrug 6,05 g/cm³, d.h. sie waren praktisch zu 100 % dicht. Im "As fired"-Zustand wiesen sie Vierpunktbiegefestigkeiten von 750 bis 800 MPa und eine Druckzähigkeit um 9 MPa·m^{1/2} bei Raumtemperatur auf.

### Beispiel 6

Die Beispiel 4 und 5 wurden wiederholt mit dem Unterschied, daß das Sprühpulver nicht bei 1000°C, sondern 2 h bei 1200°C calciniert wurde.

Unter dem Mikroskop wurden nur die Hohlkugeln mit Maßen wie in Beispiel 5 gefunden. Wie in Beispiel 5 wurde eine Spritzgießmasse hergestellt, jedoch mit dem Unterschied, daß anstelle 1000 g des erfindungsgemäßen stabilisierten Zirkondioxidpulvers 1150 g eingesetzt wurden, was zu einem höheren Volumenfüllgrad von 53,5 % führte. Aus dem erhaltenen Granulat wurden durch Spritzgießen, Entbindern mit Salpetersäure und Sintern bei 1500°C wie in Beispiel 4 Prüfstäbe hergestellt, die während des Sinterns in ihren linearen Dimensionen um 18,8 % geschrumpft waren. Ihre Dichte betrug 6,05 g/cm³, sie waren damit praktisch zu 100 % dicht. Die Vierpunktbiegefestigkeiten im unbearbeiteten Zustand lagen bei 740 bis 820 MPa, die Bruchzähigkeiten von 9 MPa m^{1/2}, beide Eigenschaften bei Raumtemperatur gemessen.

## Patentansprüche

1. Verfahren zur Herstellung von pulverförmigem Zirkondioxid durch Lösen einer chloridfreien Zirkonverbindung in einem Ameisensäure-Wasser-Gemisch im Molverhältnis 1:1 bis 1:3, Entfernen der flüchtigen Komponenten und Kalzination des Rückstands, **dadurch gekennzeichnet, daß** man das pulverförmige Zirkondioxid durch Sprühtrocknung der Lösung und Kalzination des Sprühpulvers gewinnt.

2. Verfahren nach Anspruch 1, **dadurch gekennzeichnet, daß** die Zirkonverbindung Zirkonoxidhydrat oder basisches Zirkoncarbonat ist.

3. Verfahren nach den Ansprüchen 1 oder 2, **dadurch gekennzeichnet, daß** man dem Zirkondioxid vor, während oder nach seiner Herstellung mindestens einen Zusatz und/oder mindestens einen Vorläufer eines Zusatzes zugibt, welcher die tetragonale Modifikation des Zirkondioxid-Endprodukts stabilisiert.

4. Verfahren nach Anspruch 3, **dadurch gekennzeichnet, daß** man die Zirkonverbindung gemeinsam mit dem stabilisierenden Zusatz und/oder seiner Vorstufe in der Mischung aus Ameisensäure und Wasser löst.

5. Verfahren nach den Ansprüchen 3 oder 4, **dadurch gekennzeichnet, daß** die Konzentration an Zirkon- und gegebenenfalls Stabilisatorverbindung in der Lösung vor der Sprühtrocknung mindestens 25 Gew.-%, berechnet als Oxide, beträgt.

6. Verfahren nach den Ansprüchen 4 oder 5, **dadurch gekennzeichnet, daß** man als stabilisierenden Zusatz oder Vorläufer eines Zusatzes mindestens eine Yttriumverbindung verwendet.

7. Verfahren nach Anspruch 6, **dadurch gekennzeichnet, daß** der stabilisierende Zusatz oder der Vorläufer des stabilisierenden Zusatzes Yttriumoxid oder Yttriumcarbonat ist.

8. Verfahren nach den Ansprüchen 6 oder 7, **dadurch gekennzeichnet, daß** man die Yttriumverbindung in einer Menge zugibt, die zu einem Yttriumoxidgehalt des Zirkondioxid-Endprodukts von 2 bis 10 Mol-% führt.

9. Verfahren nach den Ansprüchen 3 bis 8, **dadurch gekennzeichnet, daß** man das sprühgetrocknete Pulver einer Hoch-temperaturkalzination zwischen 850 und 1350°C unterwirft.

## Claims

1. A process for preparing pulverulent zirconium dioxide by dissolving a chloride-free zirconium compound in a formic acid/water mixture having a molar ratio of from 1:1 to 1:3, removing the volatile components and calcining the residue, wherein the pulverulent zirconium dioxide is obtained by spray drying the solution and calcining the spray-dried powder.

2. A process as claimed in claim 1, wherein the zirconium compound is hydrated zirconium oxide or basic zirconium carbonate.

3. A process as claimed in claim 1 or 2, wherein at least one additive and/or at least one precursor of an additive which stabilizes the tetragonal modification of the final zirconiur dioxide product is added to the zirconium dioxide before, during or after its preparation.

4. A process as claimed in claim 3, wherein the zirconium compound is dissolved together with the stabilizing additive and/or its precursor in the mixture of formic acid and water

5. A process as claimed in claim 3 or 4, wherein the concentration of zirconium compound and any stabilizer compound in the solution prior to spray drying is at least 25% by weight, calculated as oxides.

6. A process as claimed in claim 4 or 5, wherein the stabilizing additive or precursor of an additive used is at least one yttrium compound.

7. A process as claimed in claim 6, wherein the stabilizing additive or the precursor of the stabilizing additive is yttrium oxide or yttrium carbonate.

8. A process as claimed in claim 6 or 7, wherein the yttrium compound is added in an amount which leads to an yttrium oxide content of the final zirconium dioxide product of from 2 to 10 mol%.

9. A process as claimed in any of claims 3 to 8, wherein the spray-dried powder is subjected to a high-temperature calcination at from 850 to 1350°C.

## Revendications

1. Procédé pour la fabrication de dioxyde de zirconium pulvérulent par dissolution d'un composé de zirconium exempt de chlorure dans un mélange d'acide formique-eau dans le rapport molaire de 1:1 à 1:3, élimination des composants volatils et calcination du résidu, **caractérisé en ce qu'**on obtient le dioxyde de zirconium pulvérulent par séchage par pulvérisation de la solution et par calcination de la poudre résultant du séchage par pulvérisation.

2. Procédé selon la revendication 1, **caractérisé en ce que** le composé de zirconium est de l'oxydhydrate de zirconium ou du carbonate de zirconium basique.

3. Procédé selon les revendications 1 ou 2, **caractérisé en ce qu'**on ajoute au dioxyde de zirconium avant, pendant ou après sa fabrication, au moins un additif et/ou au moins un précurseur d'un additif, qui stabilise la modification tétragonale du produit final de dioxyde de zirconium.

4. Procédé selon la revendication 3, **caractérisé en ce qu'**on dissout le composé de zirconium de manière conjointe avec l'additif de stabilisation et/ou son précurseur dans le mélange constitué par l'acide formique et l'eau.

5. Procédé selon les revendications 3 ou 4, **caractérisé en ce que** la concentration du composé de zirconium et le cas échéant du composé de stabilisation dans la solution avant le séchage par pulvérisation s'élève à au moins 25 % en poids, calculé comme oxydes.

6. Procédé selon les revendications 4 ou 5, **caractérisé en ce qu'**on utilise, à titre d'additif de stabilisation ou de précurseur d'un additif, au moins un composé d'yttrium.

7. Procédé selon la revendication 6, **caractérisé en ce que** l'additif de stabilisation ou le précurseur de l'additif de stabilisation est l'oxyde d'yttrium ou le carbonate d'yttrium.

8. Procédé selon les revendications 6 ou 7, **caractérisé en ce qu'**on ajoute le composé d'yttrium en une quantité qui donne lieu à une teneur en oxyde d'yttrium du produit final de dioxyde de zirconium de 2 à 10 moles %.

9. Procédé selon les revendications 3 à 8, **caractérisé en ce qu'**on soumet la poudre séchée par pulvérisation à une calcination à température élevée entre 850 et 1350°C.
